# EUROPÄISCHE PATENTSCHRIFT

(11) **EP 2 670 044 B1**
(45) Veröffentlichungstag und Bekanntmachung des Hinweises auf die Patenterteilung: **01.01.2020**
(21) Anmeldenummer: 12004177.7
(22) Anmeldetag: 31.05.2012
(51) Int. Cl.: H02M 5/458, H02M 1/32, H02P 3/22, H02P 6/24, B66B 1/30

(54) **Frequenzumrichter, Verfahren zum Bremsen eines Synchronmotors und Antriebseinheit**
Frequency inverter, method for braking a synchronous motor and drive unit
Convertisseur de fréquence, procédé de freinage d'un moteur synchrone et unité d'entraînement

(43) Veröffentlichungstag der Anmeldung: 04.12.2013
(73) Patentinhaber: ZIEHL-ABEGG SE, 74653 Künzelsau (DE)
(72) Erfinder: Eisert, Gerhard, 74676 Niedernhall (DE); Hoppenstedt, Roland, 74639 Zweiflingen (DE); Schnauffer, Bernd, 74535 Mainhardt-Hütten (DE); Spannagel, Mathias, 74523 Schwäbisch Hall (DE)
(74) Vertreter: Kunst, Manuel Nikolaus Johannes

(56) Entgegenhaltungen:
- EP-A1- 0 704 961
- EP-A1- 1 162 726
- DE-A1- 19 833 551
- JP-A- 2007 037 301
- US-A1- 2004 227 479

## Beschreibung

Die Erfindung betrifft einen Frequenzumrichter mit einer Leistungsendstufe, welche zum Antrieb eines an einer Ausgangsseite der Leistungsendstufe angeschlossenen oder anschließbaren Synchronmotors eingerichtet ist, wobei an einer Ausgangsseite der Leistungsendstufe ein Zwischenkreiskondensator angeschlossen ist.

Die Erfindung betrifft weiter ein Verfahren zum Bremsen eines Synchronmotors, wobei der Synchronmotor an einer Ausgangsseite einer Leistungsendstufe eines Frequenzumrichters angeschlossen ist und wobei eine Eingangsseite der Leistungsendstufe in einem generatorischen Betrieb des Synchronmotor kurzgeschlossen wird.

Die Erfindung betrifft schließlich eine Antriebseinheit, insbesondere für einen Seilaufzug, mit einem zum elektromotorischen Antrieb eines Fahrkorbs oder einer Fahrkabine eingerichteten Synchronmotors und mit einem Frequenzumrichter.

Derartige Antriebseinheiten, Frequenzumrichter und Verfahren sind aus der Aufzugstechnik, insbesondere von Seilaufzügen, bekannt, wobei durch den Kurzschluss der Eingangsseite ein Kurzschluss der Wicklungen des Synchronmotors bewirkbar ist, um beispielsweise im Havarie-Fall eine Bremswirkung des Synchronmotors im generatorischen Betrieb zu erzeugen. Hierbei wird unter dem generatorischen Betrieb ein Betrieb des Synchronmotors verstanden, bei welchem mechanische Bewegungsenergie in elektrische Energie umgewandelt wird.

Zum Schalten des Kurzschlusses ist es aus der Praxis bekannt, Schaltschütze zu verwenden. Diese haben den Vorteil, dass sicherheitstechnische Anforderungen nach in der Praxis bewährten Regeln implementiert werden können. Die bekannte Schaltschütze haben häufig den Nachteil, dass jeder Schaltvorgang ein Geräusch verursacht, welches von den Benutzern als störend empfunden werden kann.

Aus der DE 29813080 U1 ist eine Schutzeinrichtung gegen Spannungsrückwirkung permanenten erregter elektrischer Antriebe bekannt, bei welchem ausgangsseitig in Bezug auf eine Leistungsendstufe eines Frequenzumrichters drei Phasen mit einem Thyristor kurzgeschlossen werden, um eine Umformatierung der Zwischenkreiskondensatoren und ein Überschreiten der Sperrspannung der Stromrichterventile des Frequenzumrichters zu vermeiden. Auf diese Weise soll der Frequenzumrichter vor einer Zerstörung durch Spannungsrückwirkungen permanent erregter elektrischer Antriebe im oberen Drehzahlbereich geschützt werden.

Aus EP 0 704 961 A1 sind ein Verfahren und eine Vorrichtung zum Bremsen eines Synchronmotors bekannt, wobei zwei Schalter in einer Reihenschaltung angeordnet sind, um Zwischenkreiskondensatoren kurzzuschließen, wobei ein Schalter zum Überbrücken eines Widerstands angeschlossen ist, wenn die Motorgeschwindigkeit Null ist.

Aus US 2004/0227479 A1 ist ein Stromversorgungsgerät für einen Motor bekannt, wobei ein Geschwindigkeitsdetektor eine Motorgeschwindigkeit detektiert und eine Steuerungseinheit einen Bremsschalter derart ansteuert, dass ein An-Aus-Intervall des Schaltelement in Abhängigkeit von der erfassten Geschwindigkeit wählbar ist.

Aus EP 1162726 A1 ist ein Halbleiter-Umrichter mit einem dynamischen Bremskreis bekannt, wobei der dynamische Bremskreis einen Halbleiterbremsschalter anschaltet, um die Versorgungsleitungen eines Motors kurzzuschließen, damit ein Bremswiderstand Energie absorbieren kann.

Aus DE 19833551 A ist eine Stromversorgungseinrichtung für eine Last bekannt, bei welcher eine öffen- und schließbare Halbleiter-Schalteinheit durch einen Bremsbefehlsgeber und eine Spannungserfassungseinheit ansteuerbar ist.

Aus JP 2007037301 A ist ein Robotersteuergerät bekannt, bei welchem ein Steuerungskreis Relaiskontakte öffnet und an IGBTs Abschalt-Kommandosignale und Einschalt-Kommandosignale ausgibt, wenn der Steuerungskreis ein Fehlersignal eines Treiberkreises detektiert.

Der Erfindung liegt die Aufgabe zugrunde, eine Antriebseinheit für Aufzüge mit verbesserten Gebrauchseigenschaften bereitzustellen.

Die Erfindung löst diese Aufgabe durch eine Vorrichtung gemäß Anspruch 1 und ein Verfahren gemäß Anspruch 4. Alle technischen Merkmale der unabhängigen Ansprüche sind erforderlich und nicht optional, unabhängig von gegebenenfalls widersprechenden Aussagen in den folgenden Textpassagen. Bevorzugte Ausführungsformen werden in den abhängigen Ansprüchen beschrieben. Insbesondere ist somit bei einem Frequenzumrichter der eingangs beschriebenen Art vorgesehen, dass ein elektronisches Schaltelement ausgebildet ist, mit welchem die Eingangsseite der Leistungsendstufe kurzschließbar ist, dass eine Ansteuerungsschaltung des elektronischen Schaltelements ausgebildet ist, die zwischen einem nicht-aktivierten Zustand und einem aktivierten Zustand überführbar eingerichtet ist, dass die Ansteuerungsschaltung in den aktivierten Zustand überführt ist, wenn die von dem Zwischenkreiskondensator an der Eingangsseite anliegende Spannung auf oder unter einen ersten Schwellwert abgefallen ist, und dass der Kurzschluss des elektronischen Schaltelements bei aktiviertem Zustand der Ansteuerungsschaltung durch eine von der Ausgangsseite der Leistungsendstufe an deren Eingangsseite erzeugte, einen zweiten Schwellwert erreichende oder übersteigende Spannung auslösbar ist. Von Vorteil ist dabei, dass statt der in der Aufzugstechnik bekannten und bewährten Schaltschütze elektronische Schaltelemente einsetzbar sind, wodurch Schaltgeräusche vermeidbar sind.

Die beschriebene Ausgestaltung der Ansteuerungsschaltung hat den Vorteil, dass ein selbstbetätigtes Auslösen des Bremsvorgangs durch den Synchronmotor erreichbar ist. Hierzu bietet die Erfindung den Vorteil, dass die Ansteuerungsschaltung bei einem Stromausfall oder einer anderen Havarie, bei welcher die Zwischenkreisspannung über dem Zwischenkreiskondensator unter einen vorgegebenen ersten Schwellwert abfällt, automatisch in einen aktivierten Zustand überführt wird und überführt ist. In diesem aktivierten Zustand kann eine an dem Synchronmotor im generatorischen Betrieb erzeugte und über die Leistungsendstufe an der Eingangsseite anliegende Spannung mit dem elektronischen Schaltelement einen Kurzschluss der Eingangsseite schalten. Mit dem erfindungsgemäß eingerichteten Frequenzumrichter ist somit ein selbsthemmendes System geschaffen, das bei einem Netzausfall oder einem Not-Aus oder dergleichen, eine Versorgung des Zwischenkreiskondensators mit elektrischer Energie unterbrechenden oder abschwächenden Betriebszustand, ein Bremsen des Synchronmotors bewirkt. Durch den Kurzschluss wird an den Wicklungen des Synchronmotors ein magnetisches Feld aufgebaut, welches der Rotationsbewegung des Synchronmotors entgegengesetzt ist und welches daher den Synchronmotor bremst.

Der zweite Schwellwert kann beispielsweise so gewählt sein, dass die zugehörige Spannung innerhalb einer vorgegebenen Zeitspanne nach dem Abschalten durch den generatorischen Betrieb erreichbar ist. Somit können Sicherheitsvorgaben erfüllt werden.

Beispielsweise kann der zweite Schwellwert kleiner als der erste Schwellwert gewählt sein.

Bei einer Ausgestaltung der Erfindung kann vorgesehen sein, dass das elektronische Schaltelement bei nicht-aktiviertem Zustand der Ansteuerungsschaltung in einer Offenstellung ist. Bevorzugt ist hierbei vorgesehen, dass das elektronische Schaltelement im nicht-aktivierten Zustand nicht kurzschließbar ist. Von Vorteil ist dabei, dass ein Kurzschluss im Normalbetrieb, also solange die Zwischenkreisspannung am Zwischenkreiskondensator oberhalb des ersten Schwellwerts befindlich ist, ausschließbar ist.

Bei einer Ausgestaltung der Erfindung kann vorgesehen sein, dass die Ansteuerungsschaltung wenigstens einen Trennschalter aufweist, mit welchem der Zwischenkreiskondensator von der Eingangsseite trennbar ist. Somit ist auf einfacher Weise erreichbar, dass die an der Eingangsseite anliegende Spannung unter einen ersten Schwellwert fällt, da diese Spannung bei Trennung des Zwischenkreiskondensators von der Eingangsseite sogar auf Null abfällt. Von Vorteil ist dabei, dass der Trennschalter zur Auslösung des Bremsvorgangs im generatorischen Betrieb einsetzbar ist, beispielsweise nach einem erkannten Havarie-Fall oder nach erkanntem Ausfall der Netzversorgung.

Bei einer Ausgestaltung der Erfindung kann vorgesehen sein, dass das elektronische Schaltelement ein Thyristor ist. Somit ist ein technisch einfach handhabbares elektronisches Schaltelement bereitgestellt, mit welchem ein Kurzschluss der Eingangsseite durch eine Spannung bewirkbar ist.

Bei einer Ausgestaltung der Erfindung kann vorgesehen sein, dass das elektronische Schaltelement einen Schalteingang aufweist, mit welchem es kurzschließbar ist. Von Vorteil ist dabei, dass das elektronische Schaltelement über den Schalteingang elektronisch schaltbar ist. Beispielsweise kann das Schaltelement somit durch die Spannung an der Eingangsseite schaltbar eingerichtet sein.

Bei einer Ausgestaltung der Erfindung kann vorgesehen sein, dass das elektronische Schaltelement kurzgeschlossen ist, wenn eine Spannung an dem oder einem Schalteingang einen dritten Schwellwert erreicht oder überschreitet. Von Vorteil ist dabei, dass das elektronische Schaltelement als passives, selbstaktivierendes Element ausbildbar ist. Bevorzugt ist vorgesehen, dass der Schalteingang direkt oder indirekt an die Eingangsseite angeschlossen ist. Der dritte Schwellwert kann eine Zünd- oder Schaltspannung des elektronischen Schaltelements sein.

Bei einer Ausgestaltung der Erfindung kann vorgesehen sein, dass der oder ein Schalteingang des elektronischen Schaltelements über einen Spannungsteiler an die Eingangsseite angeschlossen ist. Von Vorteil ist dabei, dass eine Kopplung zwischen einer an der Eingangsseite anliegenden Spannung und einer an dem Schalteingang anliegenden Spannung einrichtbar ist. Somit kann erreicht werden, dass ein Kurzschließen des elektronischen Schaltelements erzwingbar ist, wenn eine Spannung an der Eingangsseite den zweiten Schwellwert erreicht oder überschreitet. Durch den Spannungsteiler kann ein festes Verhältnis zwischen dem zweiten Schwellwert und dem dritten Schwellwert eingestellt sein.

Bei einer Ausgestaltung der Erfindung kann vorgesehen sein, dass der oder ein Schalteingang in einem nicht-aktivierten Zustand mit einem Deaktivierungselement auf Potential Null schaltbar ist. Somit kann ein unbeabsichtigtes Kurzschließen des elektronischen Schaltelements im nicht-aktivierten Zustand verhindert werden.

Alternativ oder zusätzlich kann vorgesehen sein, dass der oder ein Schalteingang in einem nicht-aktiviertem Zustand mit einem Deaktivierungselement von einer an der Eingangsseite anliegenden Spannung trennbar ist. Von Vorteil ist dabei, dass ein Auslösen des Kurzschließens durch das elektronische Schaltelement im nicht-aktivierten Zustand ausschließbar ist.

Bei einer Ausgestaltung der Erfindung kann vorgesehen sein, dass das Deaktivierungselement und der Trennschalter gekoppelt schaltbar sind. Dies kann beispielsweise durch eine gleichzeitige Schaltung des Deaktivierungselements und des Trennschalters mittels einer zentralen Schalteinheit erreichbar sein. Die Kopplung kann auch durch eine direkte mechanische oder elektrische oder elektronische Kopplung zwischen dem Trennschalter und dem Deaktivierungselement eingerichtet sein.

Mit dem Deaktivierungselement ist somit die Ansteuerungsschaltung in den nicht-aktivierten Zustand überführbar. Somit ist verhinderbar, dass die Ansteuerungsschaltung in den aktivierten Zustand überführt werden kann, solange das Deaktivierungselement in einem deaktivierten Schaltzustand ist.

Bei einer Ausgestaltung der Erfindung kann vorgesehen sein, dass das elektronische Schaltelement im aktivierten Zustand durch elektrische Energie aus dem generatorischen Betrieb betätigbar ist. Von Vorteil ist dabei, dass elektrische Energie, die im generatorischen Betrieb erzeugt wird, als Schaltenergie zum Schalten des elektronischen Schaltelements verwendbar ist, um die Eingangsseite der Leistungsendstufe kurzzuschließen. Somit ist ein passives Bauelement geschaffen, dessen Schaltenergie zum Kurzschließen der Eingangsseite aus der elektrischen Energie, welche im generatorischen Betrieb erzeugt wird, abzweigbar ist.

Bei einer Ausgestaltung der Erfindung kann vorgesehen sein, dass die Leistungsendstufe Leistungs-Transistoren und/oder Freilaufdioden aufweist. Von Vorteil ist dabei, dass die Freilaufdioden der Leistungs-Transistoren als Gleichrichter verwendbar sind, um die Schaltenergie zur Betätigung des elektronischen Schaltelements aus der Wechselspannung des generatorischen Betriebs an der Eingangsseite umzuwandeln und bereitzustellen.

Zur Lösung der genannten Aufgabe ist bei dem eingangs beschriebenen Verfahren erfindungsgemäß vorgesehen, dass eine Ansteuerungsschaltung eines elektronischen Schaltelements in einen aktivierten Zustand überführt wird, wenn eine von einem Zwischenkreiskondensator des Frequenzumrichters an der Eingangsseite anliegende Spannung auf oder unter einem ersten Schwellwert abgefallen ist und dass mit dem elektronischen Schaltelement im aktivierten Zustand der Ansteuerungsschaltung die Eingangsseite kurzgeschlossen wird, wenn eine im generatorischen Betrieb von der Ausgangsseite der Leistungsendstufe an deren Eingangsseite anliegende Spannung einen zweiten Schwellwert erreicht oder übersteigt. Von Vorteil ist dabei, dass ein selbstaktivierendes Verfahren zum Bremsen bereitgestellt ist, bei welchem zum Kurzschluss ein elektronisches Schaltelement einsetzbar ist. Schaltgeräusche sind somit vermeidbar, wodurch die Gebrauchseigenschaften einer Antriebseinheit, bei welcher das Verfahren eingesetzt wird, verbessert sind. Durch die zweistufige Schaltung, bei welcher zunächst eine Ansteuerungsschaltung aus einem nicht-aktivierten Zustand in einen aktivierten Zustand überführt wird, um im Anschluss mit der im generatorischen Betrieb erzeugten Spannung den Kurzschluss des elektronischen Schaltelements zu bewirken, ist ein selbstaktivierendes Verfahren mit passiven Bauelementen bereitgestellt. Hohe sicherheitstechnische Anforderungen, wie sie beispielsweise in der Aufzugstechnik bestehen, lassen sich somit erfüllen.

Bei einer Ausgestaltung der Erfindung kann vorgesehen sein, dass die Ansteuerungsschaltung in den aktivierten Zustand überführt wird, wenn der Zwischenkreiskondensator von der Eingangsseite getrennt wird oder ist. Hierbei bewirkt die Trennung des Zwischenkreiskondensators von der Eingangsseite, dass an der Eingangsseite die Spannung auf den Wert Null und somit unter einen vorgegebenen ersten Schwellwert fällt. Beispielsweise ist diese Trennung der Eingangsseite von einem Zwischenkreiskondensator durch einen Trennschalter bewirkbar.

Bei einer Ausgestaltung der Erfindung kann vorgesehen sein, dass die Eingangsseite durch das elektronische Schaltelement kurzgeschlossen wird, wenn eine Spannung an einem Schalteingang des elektronischen Schaltelements einen dritten Schwellwert erreicht oder übersteigt und die Ansteuerungsschaltung in den aktivierten Zustand überführt ist. Von Vorteil ist dabei, dass eine elektrische Energie in Form einer Spannung an dem Schalteingang als Schaltenergie des elektronischen Schaltelements verwendbar ist. Zusätzliche mechanische Betätigungen sind verzichtbar.

Bei einer Ausgestaltung der Erfindung kann vorgesehen sein, dass das elektronische Schaltelement in eine Offenstellung überführt wird, wenn die Ansteuerungsschaltung im nicht-aktivierten Zustand ist. Von Vorteil ist dabei, dass ein Kurzschluss der Eingangsseite durch das elektronische Schaltelement im nicht-aktivierten Zustand der Ansteuerungsschaltung verhinderbar ist. Somit kann vermieden werden, dass der der Zwischenkreiskondensator oder ein Zwischenkreis ungewollt durch das elektronische Schaltelement kurzgeschlossen wird.

Bei einer Ausgestaltung der Erfindung kann vorgesehen sein, dass die im generatorischen Betrieb an der Eingangsseite anliegende Spannung über einen Spannungsteiler dem oder einem Schalteingang des elektronischen Schaltelements zugeführt wird. Von Vorteil ist dabei, dass die elektrische Energie, welche im generatorischen Betrieb erzeugt wird, als Schaltenergie für das elektronische Schaltelement nutzbar ist und genutzt wird. Somit ist ein selbstaktivierendes System geschaffen, bei welchem die zu bremsende Bewegung an dem Synchronmotor die Energie erzeugt, welche zur Auslösung des Bremsvorganges erforderlich ist.

Bei einer Ausgestaltung der Erfindung kann vorgesehen sein, dass ein oder der Schalteingang des elektronischen Schaltelements in einem nicht-aktivierten Zustand auf Potential Null geschaltet wird. Somit kann ein unbeabsichtigtes Kurzschließen mit dem elektronischen Schaltelement im nicht-aktivierten Zustand der Ansteuerungsschaltung verhindert werden.

Alternativ oder zusätzlich kann vorgesehen sein, dass ein oder der Schalteingang des elektronischen Schaltelements in dem nicht-aktivierten Zustand von einer an der Eingangsseite anliegenden Spannung getrennt wird. Von Vorteil ist dabei, dass auf einfache Weise vermieden werden kann, dass die zur Betätigung des elektronischen Schaltelements erforderliche Schaltenergie zu dem elektronischen Schaltelement transportiert wird. Somit kann ausgeschlossen werden, dass das elektronische Schaltelement unbeabsichtigt betätigt wird.

Bei einer Ausgestaltung der Erfindung kann vorgesehen sein, dass die Schaltung des Schalteingangs auf Potential Null zwangsaufgehoben wird, wenn der Zwischenkreiskondensator von der Eingangsseite getrennt wird oder ist. Somit kann auf einfache Weise erreicht werden, dass die Ansteuerungsschaltung in den aktivierten Zustand überführt wird, wenn die Spannung an der Eingangsseite auf Null abfällt, da der Zwischenkreiskondensator von der Eingangsseite getrennt ist.

Bei einer Ausgestaltung der Erfindung kann vorgesehen sein, dass die im generatorischen Betrieb an der Eingangsseite anliegende Spannung durch Gleichrichtung mit Freilaufdioden von Leistungs-Transistoren der Leistungsendstufe einer an der Ausgangsseite angelegten Wechselspannung erzeugt wird. Von Vorteil ist dabei, dass die Schaltenergie zur Schaltung des elektronischen Schaltelements auf einfache Weise aus dem generatorischen Betrieb bereitgestellt werden kann. Von Vorteil ist dabei weiter, dass die ohnehin vorhandenen Freilaufdioden der Leistungsendstufe als Gleichrichter verwendbar sind, um die Wechselspannung des generatorischen Betriebs in eine Gleichspannung oder einen Spannungspegel an der Eingangsseite umzuwandeln.

Zur Lösung der genannten Aufgabe ist erfindungsgemäß bei einer Antriebseinheit vorgesehen, dass der Frequenzumrichter erfindungsgemäß ausgebildet ist und/oder dass der Frequenzumrichter zur Ausführung eines erfindungsgemäßen Verfahrens eingerichtet ist. Von Vorteil ist dabei, dass eine Antriebseinheit bereitgestellt ist, welche eine geringe Geräuschentwicklung durch Schaltvorgänge bei gleichzeitiger Erfüllung von hohen sicherheitsgerichteten Anforderungen aufweist.

Besonders günstig ist es, wenn die Antriebseinheit zum Antrieb eines Aufzugs mit Gegengewicht ausgebildet und eingerichtet ist.

Die Erfindung kann daher mit Vorteil eingesetzt werden bei einem Aufzug mit einem Gegengewicht, insbesondere bei einem Seilaufzug, bei welchem die Antriebseinheit erfindungsgemäß ausgebildet und/oder eingerichtet ist.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination einzelner oder mehrerer Merkmale der Schutzansprüche untereinander und/oder mit einzelnen oder mehreren Merkmalen der Ausführungsbeispiele. In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

Es zeigt in stark vereinfachter Darstellung zur Erläuterung des erfindungsgemäßen Prinzips
- Fig. 1:: eine Schaltskizze einer ersten erfindungsgemäßen Antriebseinheit mit einem ersten erfindungsgemäßen Frequenzumrichter,
- Fig. 2:: eine weitere Schaltskizze einer nicht erfindungsgemäßen Antriebseinheit mit einem Frequenzumrichter und
- Fig. 3:: eine weitere Schaltskizze einer nicht erfindungsgemäßen Antriebseinheit mit einem dritten Frequenzumrichter.

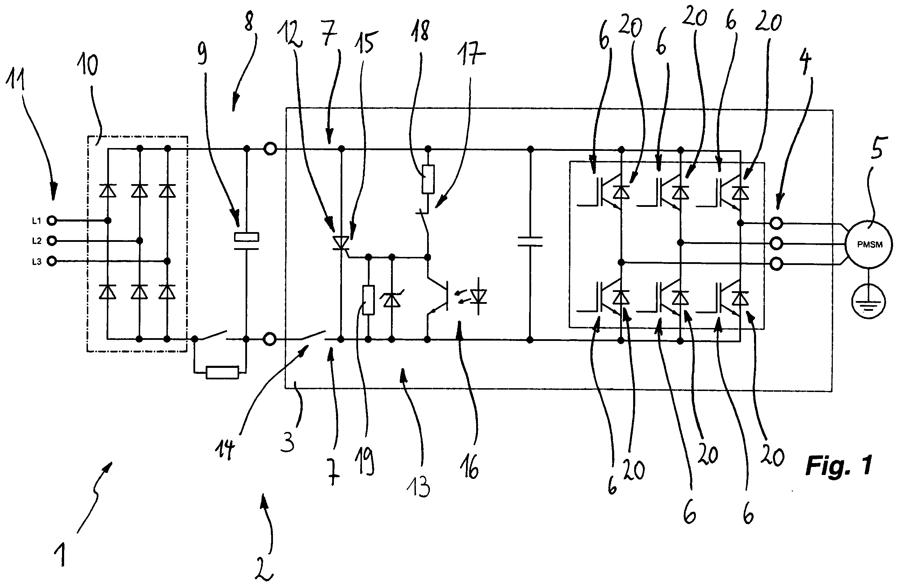

Figur 1 zeigt eine im Ganzen mit 1 bezeichnete erfindungsgemäße Antriebseinheit.

Die Antriebseinheit 1 hat einen Frequenzumrichter 2 mit einer Leistungsendstufe 3, an deren Ausgangsseite 4 ein Synchronmotor 5 angeschlossen ist.

Die Leistungsendstufe 3 des Frequenzumrichters 2 weist hierbei sechs Leistungs-Transistoren 6 auf, mit welchen die Phasen an der Ausgangsseite 4 in an sich bekannter Weise durch Pulsweiten-Modulation zum Antrieb des Synchronmotors 5 ansteuerbar sind.

Eine Eingangsseite 7 ist an einen Zwischenkreis 8 des Frequenzumrichters 2 mit einem Zwischenkreiskondensator 9 angeschlossen.

Der Zwischenkreiskondensator 9 wird im Netzbetrieb über eine Gleichrichterbrücke 10 des Frequenzumrichters 2 aus einem Netz 11 aufgeladen.

Die Eingangsseite 7 ist mit einem elektronischen Schaltelement 12 kurzschließbar.

Wird das elektronische Schaltelement 12 betätigt, um den Kurzschluss zu bewirken, so werden die nicht weiter dargestellten Wicklungen des Synchronmotors 5 kurzgeschlossen, um ein Bremsmoment im generatorischen Betrieb des Synchronmotors 5 zu erzeugen.

Der Frequenzumrichter 2 weist eine im Ganzen mit 13 bezeichnete Ansteuerungsschaltung für das elektronische Schaltelement 12 auf.

Die Ansteuerungsschaltung 13 ist zwischen einem nicht-aktivierten Zustand und einem aktivierten Zustand umschaltbar oder überführbar eingerichtet, wie im Folgenden noch näher beschrieben wird.

Im aktivierten Zustand der Ansteuerungsschaltung 13 ist das elektronische Schaltelement 12 betätigbar, um den Kurzschluss der Eingangsseite 7 zu bewirken.

Im nicht-aktivierten Zustand ist das elektronische Schaltelement 12 gegen eine Betätigung gesperrt. Ein Kurzschluss der Eingangsseite 7 ist somit im nicht-aktivierten Zustand der Ansteuerungsschaltung 13 mit dem elektronischen Schaltelement 12 nicht erreichbar.

Wie aus der Schaltskizze gemäß Fig. 1 ersichtlich ist, fällt die von dem Zwischenkreiskondensator 9 an der Eingangsseite 7 anliegende Spannung auf Null und somit unter jeden positiven ersten Schwellwert ab, wenn der Trennschalter 14 geöffnet wird.

Das elektronische Schaltelement 12 ist als Thyristor mit einem Schalteingang 15 ausgebildet. Übersteigt die Spannung an dem Schalteingang 15 einen dritten Schwellwert, so zündet der Thyristor, und das elektronische Schaltelement 12 schließt die Eingangsseite 7 kurz.

Die Ansteuerungsseite 13 weist ein Deaktivierungselement 16 auf, welches als Optokoppler ausgebildet ist.

Mit einer nicht weiter dargestellten zentralen Schalteinheit ist eine Kopplung der Schaltzustände des Trennschalters 14 und des Deaktivierungselement 16 eingerichtet, durch welche das Deaktivierungselement 16 den Schalteingang 15 des elektronischen Schaltelements 12 auf Potential Null schaltet, wenn der Trennschalter 14 geschlossen ist.

Somit kann ausgeschlossen werden, dass das elektronische Schaltelement 12 zündet und den Schalteingang 7 kurzschließt, so lange der Zwischenkreiskondensator 9 mit der Eingangsseite 7 spannungsführend verbunden ist.

Mit dem Deaktivierungselement 16 ist somit die Betätigung des elektronischen Schaltelements 12 sperrbar.

Die Ansteuerungsschaltung 13 hat ein weiteres Deaktivierungselement 17, welches als Öffner ausgebildet ist.

Mit dem Deaktivierungselement 17 ist der Schalteingang 15 in der Offenstellung des Deaktivierungselements 17 von einer an der Eingangsseite 7 anliegenden Spannung trennbar.

Somit verhindert das Deaktivierungselement 17 in seiner Offenstellung, dass das elektronische Schaltelement 12 über den Schalteingang 15 betätigt werden kann.

Die bereits erwähnte zentrale Schalteinheit bewirkt ein synchrones Schalten des Trennschalters 14 und des Deaktivierungselements 17 derart, dass bei geöffneten Trennschalter 14 das Deaktivierungselement 17 geschlossen ist und das bei geschlossenem Trennschalter 14 das Deaktivierungselement 17 geöffnet ist.

Durch die Deaktivierungselemente 16 und 17 ist die Ansteuerungsschaltung 13 somit in einen nicht-aktivierten Zustand versetzbar, in welchem eine Betätigung des elektronischen Schaltelements 12 gesperrt ist. Durch die Deaktivierungselemente 16 und 17 ist die Ansteuerungsschaltung 13 in einen aktivierten Zustand überführbar, in welcher die Betätigung des elektronischen Schaltelements 12 freigeben ist.

Hierzu muss das Deaktivierungselement 16 geöffnet und das Deaktivierungselement 17 geschlossen sein.

Zwei Widerstände 18, 19 bewirken einen Spannungsteiler, mit welchem die Spannung an der Eingangsseite 7 in eine Spannung an den Schalteingang 15 umgesetzt wird.

Auf diese Weise kann erreicht werden, dass die Ansteuerungsschaltung 13 des elektronischen Schaltelements 12 in den aktvierten Zustand überführt wird, in welchem das elektronische Schaltelement 12 betätigbar ist, wenn eine von dem Zwischenkreiskondensator 9 des Frequenzumrichters 2 an der Eingangsseite 7 anliegende Spannung unter einen ersten Schwellwert abgefallen ist.

Dieser Spannungsabfall wird dadurch bewirkt, dass der Trennschalter 14 geöffnet wird.

Im generatorischen Betrieb erzeugt der Synchronmotor 5 eine Wechselspannung, die an der Ausgangsseite 4 der Leistungsendstufe 3 anliegt. Über die Freilaufdioden 20 der Leistungs-transistoren 6 wird diese Wechselspannung gleichgerichtet. Die gleichgerichtete Spannung liegt dann an der Eingangsseite 7 an.

Übersteigt die anliegende Spannung einen zweiten Schwellwert, welcher über den Spannungsteiler der Widerstände 18, 19 durch die Zündspannung des elektronischen Schaltelements definiert ist, so schließt das elektronische Schaltelement 12 die Eingangsseite 7 kurz, wenn die Ansteuerungsschaltung 13 - wie zuvor beschrieben - in den aktivierten Zustand überführt ist.

Dies führt dazu, dass die Eingangsseite 7 kurzgeschlossen wird, wodurch im Synchronmotor 5 ein Bremsmoment aufgebaut wird, welches dem generatorischen Betrieb entgegenwirkt.

Ein Fahrkorb, eine Fahrkabine und/oder ein Gegengewicht eines durch den Synchronmotor 5 angetriebenen Seilaufzugs wird somit gebremst.

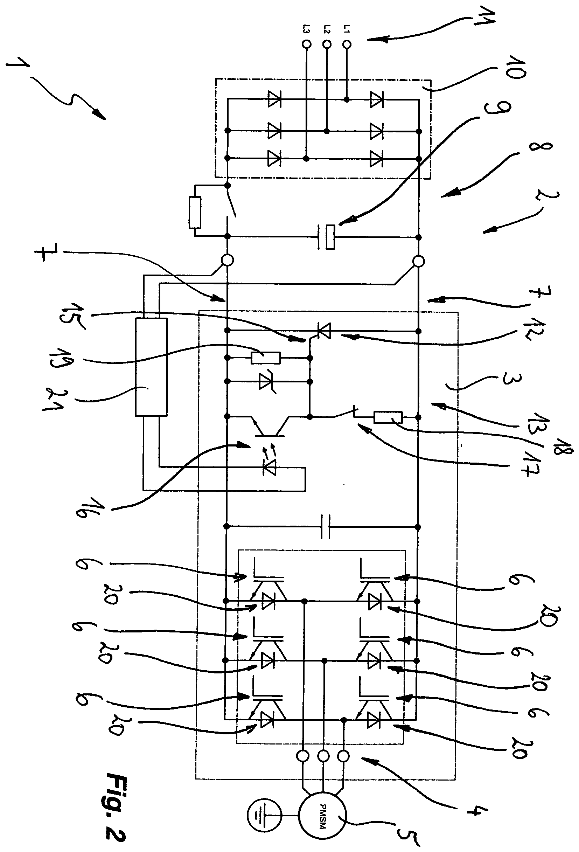

Figur 2 zeigt eine ebenfalls stark vereinfachte Prinzipskizze einer nicht erfindungsgemäßen Antriebseinheit.

Bei der Antriebseinheit 1 gemäß Figur 2 sind funktionell und/oder konstruktiv zu dem Ausführungsbespiel gemäß Figur 1 gleichartige oder ähnliche Bauteile mit denselben Bezugszeichen und/oder Symbolen bezeichnet und nicht noch einmal gesondert beschrieben.

Im Unterschied zu dem Ausführungsbeispiel gemäß Figur 1 weist die Antriebseinheit gemäß Figur 2 statt des Trennschalters 14 eine Spannungsüberwachung 21 auf, mit welcher die an der Eingangsseite 7 anliegende Spannung überwachbar ist.

Bei einem Netzausfall oder einer Abschaltung des Netzes 11 wird sich der Zwischenkreiskondensator 9 entladen.

Fällt hierdurch die Spannung an der Eingangsseite 7 unter einen vorher definierten Schwellwert, so trennt das Deaktivierungselement 16 die Verbindung des Schalteingangs 15 des elektronischen Schaltelements 12 von Potential Null.

Synchron hierzu schließt das Deaktivierungselement 17.

Somit ist die Ansteuerungsschaltung 13 in zu Figur 1 analoger Weise in den aktivierten Zustand versetzt, in welchem das elektronische Schaltelement 12 zum Kurzschluss der Eingangsseite 7 betätigbar ist.

Solange die Spannung an der Eingangsseite 7 jedoch den ersten Schwellwert nicht erreicht hat, schaltet das durch die Spannungsüberwachung 21 angesteuerte Deaktivierungselement 16 den Schalteingang 15 auf Potential Null, wodurch eine Betätigung des elektronischen Schaltelements 12 gesperrt ist. In diesem Fall ist die Ansteuerungsschaltung 13 im nicht-aktivierten Zustand.

Im aktivierten Zustand setzt sich das Verfahren wie bereits zu Figur 1 beschrieben fort, so dass das elektronische Schaltelement 12 die Eingangsseite 7 zur Abbremsung des generatorischen Betriebs am Synchronmotor 5 kurzschließt, sobald die im generatorischen Betrieb erzeugte und an der Eingangsseite 7 anliegende Spannung den durch das elektronische Schaltelement 12 und die Widerstände 18, 19 des Spannungsteilers vorgegebenen zweiten Schwellwert erreicht oder übersteigt.

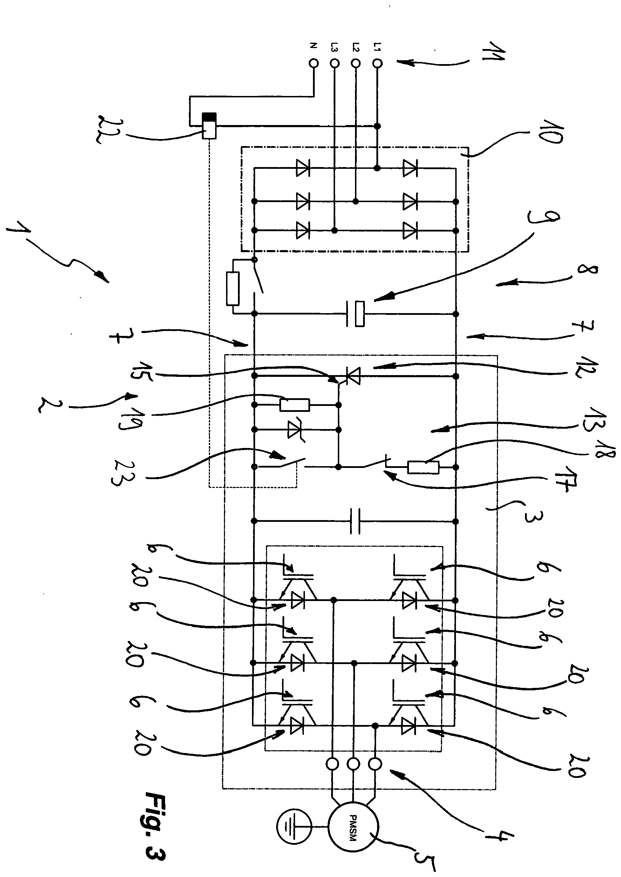

Figur 3 zeigt eine weitere, ebenfalls stark vereinfachte Schaltskizze einer nicht erfindungsgemäßen Antriebseinheit 1.

Die Antriebseinheit 1 gemäß Figur 3 unterscheidet sich von dem Ausführungsbeispiel gemäß Figur 2 dadurch, dass der Frequenzumrichter 2 statt des Trennschalters 14 ein Zeitverzögerungslied 22 aufweist, mit welchem ein Deaktivierungselement 23 ansteuerbar ist.

Das Deaktivierungselement 23 ist als Schließer ausgebildet und schaltet in analoger Weise zu dem Deaktivierungselement 16 gemäß Figur 1 oder 2 den Schalteingang 15 des elektronischen Schaltelements 12 in geschlossener Stellung auf Potential Null.

Ein Netzausfall oder Abschalten des Netzes 11 wird durch das Zeitverzögerungsglied detektiert und führt zu einem Öffnen des Deaktivierungselements 23 nach einer vorgegebenen Zeitspanne.

Diese Zeitspanne ist dadurch ausgezeichnet, dass sich der Zwischenkreiskondensator 9 derart entladen hat, dass die Spannung an der Eingangsseite 7 unter einen ersten Schwellwert gefallen ist. Somit kann vermieden werden, dass der Zwischenkreiskondensator 9 oder das elektronische Schaltelement 12 bei einem Kurzschluss der Eingangsseite 7 beschädigt wird.

Somit wird die Ansteuerungsschaltung 13 auch bei dem Ausführungsbeispiel gemäß Figur 3 von einem nicht-aktivierten Zustand, in welchem das Deaktivierungselement 23 geschlossen ist, in einen aktivierten Zustand, in welchem das Deaktivierungselement 23 den Schalteingang 15 zur Betätigung des elektronischen Schaltelements 12 freigibt, überführt.

In diesem aktivierten Zustand wird die Eingangsseite 7 mit dem elektronischen Schaltelement 12 - wie bereits zu Figur 1 und 2 beschrieben - kurzgeschlossen, sobald die von dem generatorischen Betrieb des Synchronmotors 5 an der Eingangsseite 7 anliegende Spannung den bereits erwähnten zweiten Schwellwert übersteigt.

Sobald an dem Netz 11 wieder Netzspannung liegt, schließt das Zeitverzögerungsglied 22 das Deaktivierungselement 23, wodurch der Schalteingang 15 auf Potential Null geschaltet wird.

Im nicht-aktivierten Zustand der Ansteuerungsschaltung 13 ist bei allen drei Ausführungsbeispielen gemäß Figur 1 bis Figur 3 das elektronische Schaltelement 12 dagegen in eine Offenstellung zwangsüberführt, in welcher die Eingangsseite 7 nicht kurzgeschlossen ist.

Bei dem Frequenzumrichter 2 zum Antrieb eines Synchronmotors 5 einer Antriebseinheit 1 eines Aufzugs wird vorgeschlagen, ein elektronisches Schaltelement 12 zum Kurzschluss einer Eingangsseite 7 einer Leistungsendstufe 3 des Frequenzumrichters 2 auszubilden und eine Ansteuerungsschaltung 13 des elektronischen Schaltelements 12 zwischen einem nicht-aktivierten Zustand und einem aktivierten Zustand überführbar einzurichten, wobei die Ansteuerungsschaltung 13 bei Unterschreitung eines ersten Schwellwerts für die Spannung an der Eingangsseite 7 aus dem nicht-aktivierten Zustand in den aktivierten Zustand überführt wird und wobei das elektronische Schaltelement 12 im aktivierten Zustand der Ansteuerungsschaltung 13 zum Kurzschluss der Eingangsseite 7 betätigt wird, wenn die Spannung an der Eingangsseite 7 einen zweiten Schwellwert übersteigt.

## Patentansprüche

1. Frequenzumrichter (2) mit einer Leistungsendstufe (3), welche zum Antrieb eines an einer Ausgangsseite (4) der Leistungsendstufe (3) angeschlossenen oder anschließbaren Synchronmotors (5) eingerichtet ist, wobei an einer Eingangsseite (7) der Leistungsendstufe (3) ein Zwischenkreiskondensator (9) angeschlossen ist, wobei,
- ein Thyristor als ein elektronisches Schaltelement (12) ausgebildet ist, mit welchem die Eingangsseite (7) der Leistungsendstufe (3) kurzschließbar ist,
- eine Ansteuerungsschaltung (13) des elektronischen Schaltelements (12) ausgebildet ist, die zwischen einem nicht-aktivierten Zustand und einem aktivierten Zustand überführbar eingerichtet ist,
- die Ansteuerungsschaltung (13) dazu eingerichtet ist, in den aktivierten Zustand überführt zu werden, wenn die von dem Zwischenkreiskondensator (9) an der Eingangsseite (7) anliegende Spannung auf oder unter einen ersten Schwellwert abgefallen ist,
- die Ansteuerungsschaltung (13) dazu eingerichtet ist, den Kurzschluss des elektronischen Schaltelements (12) bei aktiviertem Zustand der Ansteuerungsschaltung (13) durch eine im generatorischen Betrieb von der Ausgangsseite (4) der Leistungsendstufe (3) an deren Eingangsseite (7) anliegende, einen zweiten Schwellwert übersteigende Spannung auszulösen,
- das elektronische Schaltelement (12) einen Schalteingang (15) aufweist, mit welchem es betätigbar ist,
- die Ansteuerungsschaltung (13) dazu eingerichtet ist, den Schalteingang (15) in dem nicht-aktivierten Zustand mit einem Deaktivierungselement (16, 23) auf Potential Null zu schalten,
- die Ansteuerungsschaltung (13) wenigstens einen Trennschalter (14) aufweist, mit welchem der Zwischenkreiskondensator (9) von der Eingangsseite (7) trennbar ist,
- das Deaktivierungselement (16, 23) und der Trennschalter (14) dazu eingerichtet sind, gekoppelt zu schalten und dass der Schalteingang (15) des elektronischen Schaltelements (12) im aktivierten Zustand dazu eingerichtet ist, mittels eines Spannungsteilers an die Eingangsseite (7) angeschlossen zu werden und durch elektrische Energie aus dem generatorischen Betrieb betätigt zu werden,
- das elektronische Schaltelement (12) dazu eingerichtet ist, bei nicht-aktiviertem Zustand der Ansteuerungsschaltung (13) in einer Offenstellung zu sein,
- und die Ansteuerungsschaltung (13) ferner dazu eingerichtet ist, die Schaltung des Schalteingangs (15) auf Potential Null zwangsaufzuheben, wenn der Zwischenkreiskondensator (9) von der Eingangsseite (7) getrennt ist und den Schalteingang des elektronischen Schaltelements (12) in dem nicht-aktivierten Zustand von einer an der Eingangsseite (7) anliegenden Spannung zu trennen.

2. Frequenzumrichter (2) nach Anspruch 1, **dadurch gekennzeichnet, dass** das elektronische Schaltelement (12) betätigt ist, wenn eine Spannung an dem oder einem Schalteingang (15) einen dritten Schwellwert erreicht oder überschreitet.

3. Frequenzumrichter (2) nach einem der Ansprüche 1 oder 2, **dadurch gekennzeichnet, dass** der Schalteingang (15) in einem nicht-aktivierten Zustand mit einem weiteren Deaktivierungselement (17) von einer an der Eingangsseite (7) anliegenden Spannung trennbar ist.

4. Verfahren zum Bremsen eines Synchronmotors (5), wobei der Synchronmotor (5) an eine Ausgangsseite (4) einer Leistungsendstufe (3) eines Frequenzumrichters (2) angeschlossenen ist und wobei eine Eingangsseite (7) der Leistungsendstufe (3) in einem generatorischen Betrieb des Synchronmotors (5) kurzgeschlossen wird, **dadurch gekennzeichnet, dass** eine Ansteuerungsschaltung (13) eines Thyristors als ein elektronisches Schaltelement (12) in einen aktivierten Zustand überführt wird, wenn eine von einem Zwischenkreiskondensator (9) des Frequenzumrichters (2) an der Eingangsseite (7) anliegende Spannung auf oder unter einen ersten Schwellwert abgefallen ist, dass mit dem elektronischen Schaltelement (12) im aktivierten Zustand der Ansteuerungsschaltung (13) die Eingangsseite (7) kurzgeschlossen wird, wenn eine im generatorischen Betrieb von der Ausgangsseite (4) der Leistungsendstufe (3) an deren Eingangsseite anliegende Spannung einen zweiten Schwellwert übersteigt, dass die im generatorischen Betrieb an der Eingangsseite (7) anliegende Spannung über einen Spannungsteiler einem Schalteingang (15) des elektronischen Schaltelement (12) zugeführt wird und der Schalteingang (15) des elektronischen Schaltelements (12) in dem nicht-aktivierten Zustand mittels eines Deaktivierungselements (16, 23) auf Potential Null geschaltet wird, dass die Ansteuerungsschaltung (13) in den aktivierten Zustand überführt wird, wenn der Zwischenkreiskondensator (9) mittels eines Trennschalters (14) von der Eingangsseite (7) getrennt wird, dass der Schalteingang des elektronischen Schaltelements (12) in dem nicht-aktivierten Zustand von einer an der Eingangsseite (7) anliegenden Spannung getrennt wird, wobei das Deaktivierungselement (16, 23) und der Trennschalter (14) gekoppelt geschaltet werden, und dass die Schaltung des Schalteingangs (15) auf Potential Null zwangsaufgehoben wird, wenn der Zwischenkreiskondensator (9) von der Eingangsseite (7) getrennt wird oder ist, dass das elektronische Schaltelement (12) im aktivierten Zustand durch im generatorischen Betrieb erzeugte elektrische Energie betätigt wird und dass das elektronische Schaltelement (12) in eine Offenstellung überführt wird, wenn die Ansteuerungsschaltung (13) im nicht-aktivierten Zustand ist.

5. Verfahren nach Anspruch 4, **dadurch gekennzeichnet, dass** die Eingangsseite (7) durch das elektronische Schaltelement (12) kurzgeschlossen wird, wenn eine Spannung an einem Schalteingang (15) des elektronischen Schaltelements (12) einen dritten Schwellwert erreicht oder übersteigt und die Ansteuerungsschaltung (13) in den aktivierten Zustand überführt ist.

6. Verfahren nach einem der Ansprüche 4 oder 5, **dadurch gekennzeichnet, dass** die im generatorischen Betrieb an der Eingangsseite (7) anliegende Spannung durch Gleichrichtung mit Freilaufdioden (20) von Leistungs-Transistoren (6) der Leistungsendstufe (3) einer an der Ausgangsseite (4) angelegten Wechselspannung erzeugt wird.

7. Antriebseinheit (1), insbesondere für einen Seilaufzug, mit einem zum elektromotorischen Antrieb eines Fahrkorbs oder einer Fahrkabine eingerichteten Synchronmotor (5) und mit einem Frequenzumrichter (2), **dadurch gekennzeichnet, dass** der Frequenzumrichter (2) nach einem der Ansprüche 1 bis 3 ausgebildet ist und/oder dass der Frequenzumrichter (2) zur Ausführung eines Verfahren nach einem der Ansprüche 4 bis 6 eingerichtet ist.

## Claims

1. Frequency converter (2) having a power end stage (3), which is configured to drive a synchronous motor (5) that is connected or able to be connected to an output side (4) of the power end stage (3), wherein an intermediate circuit capacitor (9) is connected to an input side (7) of the power end stage (3), wherein
- a thyristor is formed as an electronic switching element (12), by way of which the input side (7) of the power end stage (3) is able to be short-circuited,
- an actuation circuit (13) of the electronic switching element (12) is formed, which actuation circuit is configured so as to be able to be transferred between a non-activated state and an activated state,
- the actuation circuit (13) is configured to be transferred to the activated state when the voltage applied to the input side (7) by the intermediate circuit capacitor (9) has dropped to or below a first threshold value,
- the actuation circuit (13) is configured to trigger the short circuit of the electronic switching element (12) in the activated state of the actuation circuit (13) by way of a voltage that is applied from the output side (4) of the power end stage (3) to the input side (7) thereof during generator operation and exceeds a second threshold value,
- the electronic switching element (12) has a switching input (15), by way of which it is able to be operated,
- the actuation circuit (13) is configured in the non-activated state to switch the switching input (15) to a potential of zero by way of a deactivation element (16, 23),
- the actuation circuit (13) has at least one circuit breaker (14) by way of which the intermediate circuit capacitor (9) is able to be disconnected from the input side (7),
- the deactivation element (16, 23) and the circuit breaker (14) are configured to switch in a coupled manner and the switching input (15) of the electronic switching element (12) is configured in the activated state to be connected to the input side (7) by means of a voltage divider and to be operated by way of electrical energy from the generator operation,
- the electronic switching element (12) is configured to be in an open position in the non-activated state of the actuation circuit (13),
- and the actuation circuit (13) is furthermore configured to compulsorily raise the circuit of the switching input (15) to a potential of zero when the intermediate circuit capacitor (9) is disconnected from the input side (7) and to disconnect the switching input of the electronic switching element (12) in the non-activated state from a voltage applied to the input side (7) .

2. Frequency converter (2) according to Claim 1, **characterized in that** the electronic switching element (12) is operated when a voltage at the or a switching input (15) reaches or exceeds a third threshold value.

3. Frequency converter (2) according to either of Claims 1 and 2, **characterized in that** the switching input (15) in a non-activated state is able to be disconnected from a voltage applied to the input side (7) by way of a further deactivation element (17).

4. Method for braking a synchronous motor (5), wherein the synchronous motor (5) is connected to an output side (4) of a power end stage (3) of a frequency converter (2) and wherein an input side (7) of the power end stage (3) is short-circuited in a generator operation of the synchronous motor (5), **characterized in that** an actuation circuit (13) of a thyristor as an electronic switching element (12) is transferred to an activated state when a voltage applied to the input side (7) by an intermediate circuit capacitor (9) of the frequency converter (2) has dropped to or below a first threshold value, **in that** the input side (7) is short-circuited by way of the electronic switching element (12) in the activated state of the actuation circuit (13) when a voltage applied from the output side (4) of the power end stage (3) to the input side thereof during generator operation exceeds a second threshold value, **in that** the voltage applied to the input side (7) during generator operation is fed to a switching input (15) of the electronic switching element (12) by means of a voltage divider and the switching input (15) of the electronic switching element (12) is switched to a potential of zero in the non-activated state by means of a deactivation element (16, 23), **in that** the actuation circuit (13) is transferred to the activated state when the intermediate circuit capacitor (9) is disconnected from the input side (7) by means of a circuit breaker (14), **in that** the switching input of the electronic switching element (12) is disconnected from a voltage applied to the input side (7) in the non-activated state, wherein the deactivation element (16, 23) and the circuit breaker (14) are switched in a coupled manner, and **in that** the circuit of the switching input (15) is compulsorily raised to a potential of zero when the intermediate circuit capacitor (9) is or becomes disconnected from the input side (7), **in that** the electronic switching element (12) is operated in the activated state by way of electrical energy generated during generator operation and **in that** the electronic switching element (12) is transferred to an open position when the actuation circuit (13) is in the non-activated state.

5. Method according to Claim 4, **characterized in that** the input side (7) is short-circuited by the electronic switching element (12) when a voltage at a switching input (15) of the electronic switching element (12) reaches or exceeds a third threshold value and the actuation circuit (13) is transferred to the activated state.

6. Method according to either of Claims 4 and 5, **characterized in that** the voltage applied to the input side (7) during generator operation is generated by rectification, by way of freewheeling diodes (20) of power transistors (6) of the power end stage (3), of an AC voltage applied to the output side (4).

7. Drive unit (1), in particular for a cable lift, having a synchronous motor (5) configured to drive a lift cage or a lift car by way of electric motor and having a frequency converter (2), **characterized in that** the frequency converter (2) is formed according to one of Claims 1 to 3 and/or **in that** the frequency converter (2) is configured to carry out a method according to one of Claims 4 to 6.

## Revendications

1. Convertisseur de fréquence (2) avec un étage final de puissance (3), qui est configuré pour l'entraînement d'un moteur synchrone (5) raccordé ou pouvant être raccordé à un côté de sortie (4) de l'étage de puissance (3),
- dans lequel un condensateur de circuit intermédiaire (9) est raccordé à un côté d'entrée (7) de l'étage final de puissance (3), dans lequel
- un thyristor est réalisé sous forme d'élément de commutation électronique (12), avec lequel le côté d'entrée (7) de l'étage final de puissance (3) peut être mis en court-circuit,
- il est formé un circuit de commande (13) de l'élément de commutation électronique (12), qui est configuré de façon transférable entre un état non activé et un état activé,
- le circuit de commande (13) est configuré pour être transféré dans l'état activé, lorsque la tension appliquée au côté d'entrée (7) par le condensateur de circuit intermédiaire (9) est descendue à ou en dessous d'une première valeur de seuil,
- le circuit de commande (13) est configuré pour lever le court-circuit de l'élément de commutation électronique (12) dans l'état activé du circuit de commande (13) par une tension dépassant une deuxième valeur de seuil appliquée dans le fonctionnement en générateur par le côté de sortie (4) de l'étage final de puissance (3) au côté d'entrée (7) de celui-ci,
- l'élément de commutation électronique (12) présente une entrée de commutation (15), avec laquelle il peut être actionné,
- le circuit de commande (13) est configuré pour commuter l'entrée de commutation (15) dans l'état non activé avec un élément de désactivation (16, 23), au potentiel zéro,
- le circuit de commande (13) présente au moins un sectionneur (14), avec lequel le condensateur de circuit intermédiaire (9) peut être séparé du côté d'entrée (7),
- l'élément de désactivation (16, 23) et le sectionneur (14) sont configurés pour se commuter de façon couplée et l'entrée de commutation (15) de l'élément de commutation électronique (12) dans l'état activé est configurée pour être raccordée au côté d'entrée (7) au moyen d'un diviseur de tension et pour être actionnée par de l'énergie électrique provenant du fonctionnement en générateur,
- l'élément de commutation électronique (12) est configuré pour se trouver dans une position ouverte dans l'état non activé du circuit de commande (13),
- et le circuit de commande (13) est en outre configuré pour supprimer la commutation de l'entrée de commutation (15) au potentiel zéro, lorsque le condensateur de circuit intermédiaire (9) est séparé du côté d'entrée (7) et pour séparer l'entrée de commutation de l'élément de commutation électronique (12), dans l'état non activé d'une tension appliquée au côté d'entrée (7).

2. Convertisseur de fréquence (2) selon la revendication 1, **caractérisé en ce que** l'élément de commutation électronique (12) est actionné, lorsqu'une tension à la ou à une entrée de commutation (15) atteint ou dépasse une troisième valeur de seuil.

3. Convertisseur de fréquence (2) selon une des revendications 1 ou 2, **caractérisé en ce que** l'entrée de commutation (15) dans un état non activé peut être séparée d'une tension appliquée au côté d'entrée (7) au moyen d'un autre élément de désactivation (17).

4. Procédé de freinage d'un moteur synchrone (5), dans lequel le moteur synchrone (5) est raccordé à un côté de sortie (4) d'un étage final de puissance (3) d'un convertisseur de fréquence (2) et dans lequel un côté d'entrée (7) de l'étage final de puissance (3) est mis en court-circuit dans un fonctionnement en générateur du moteur synchrone (5), **caractérisé en ce que**
on transfère un circuit de commande (13) d'un thyristor en tant qu'élément de commutation électronique (12) dans un état activé, lorsqu'une tension appliquée au côté d'entrée (7) par un condensateur de circuit intermédiaire (9) du convertisseur de fréquence (2) est descendue à ou en dessous d'une première valeur de seuil,
on met le côté d'entrée (7) en court-circuit avec l'élément de commutation électronique (12) dans l'état activé du circuit de commande (13), lorsqu'une tension appliquée en fonctionnement en générateur par le côté de sortie (4) de l'étage final de puissance (3) au côté d'entrée de celui-ci dépasse une deuxième valeur de seuil, la tension appliquée en fonctionnement en générateur au côté d'entrée (7) est fournie par un diviseur de tension à une entrée de commutation (15) de l'élément de commutation électronique (12) et l'entrée de commutation (15) de l'élément de commutation électronique (12) est commutée dans l'état non activé au potentiel zéro au moyen d'un élément de désactivation (16, 23),
on transfère le circuit de commande (13) dans l'état activé, lorsque le condensateur de circuit intermédiaire (9) est séparé du côté d'entrée (7) au moyen d'un sectionneur (14),
l'entrée de commutation de l'élément de commutation électronique (12) dans l'état non activé est séparée d'une tension appliquée au côté d'entrée (7), dans lequel l'élément de désactivation (16, 23) et le sectionneur (14) sont commutés de façon couplée, et
la commutation de l'entrée de commutation (15) au potentiel zéro est supprimée, lorsque le condensateur de circuit intermédiaire (9) est ou a été séparé du côté d'entrée (7),
l'élément de commutation électronique (12) dans l'état activé est actionné par de l'énergie électrique produite dans le fonctionnement en générateur et
l'élément de commutation électronique (12) est transféré dans une position ouverte, lorsque le circuit de commande (13) se trouve dans l'état non activé.

5. Procédé selon la revendication 4, **caractérisé en ce que** le côté d'entrée (7) est mis en court-circuit par l'élément de commutation électronique (12), lorsqu'une tension à une entrée de commutation (15) de l'élément de commutation électronique (12) atteint ou dépasse une troisième valeur de seuil et que le circuit de commande (13) est transféré dans l'état activé.

6. Procédé selon une des revendications 4 ou 5, **caractérisé en ce que** la tension appliquée en fonctionnement en générateur au côté d'entrée (7) est produite par redressement avec des diodes de roue libre (20) de transistors de puissance (6) de l'étage final de puissance (3) d'une tension alternative appliquée au côté de sortie (4).

7. Unité d'entraînement (1), en particulier pour un ascenseur à câble, avec un moteur synchrone (5) conçu pour l'entraînement par moteur électrique d'une cabine d'ascenseur ou d'une cabine et avec un convertisseur de fréquence (2), **caractérisée en ce que** le convertisseur de fréquence (2) est réalisé selon l'une quelconque des revendications 1 à 3 et/ou **en ce que** le convertisseur de fréquence (2) est conçu pour exécuter un procédé selon l'une quelconque des revendications 4 à 6.
